Europäisches Patentamt

European Patent Office

Office européen des brevets

(19)

(11) Veröffentlichungsnummer: **0 056 837**
**B1**

(12) **EUROPÄISCHE PATENTSCHRIFT**

(45) Veröffentlichungstag der Patentschrift:
**27.12.84**

(51) Int. Cl.³: **G 01 N 27/56**

(21) Anmeldenummer: **81106945.9**

(22) Anmeldetag: **04.09.81**

(54) Elektrochemischer Messfühler zur Bestimmung des Sauerstoffgehaltes in Gasen.

(30) Priorität: **23.01.81 DE 8101584 U**

(43) Veröffentlichungstag der Anmeldung:
**04.08.82 Patentblatt 82/31**

(45) Bekanntmachung des Hinweises auf die Patenterteilung:
**27.12.84 Patentblatt 84/52**

(84) Benannte Vertragsstaaten:
**CH DE FR GB IT LI SE**

(56) Entgegenhaltungen:
**FR - A - 2 396 292**
**GB - A - 2 017 925**
**US - A - 3 546 086**
**US - A - 3 576 730**
**US - A - 4 169 778**
**US - A - 4 219 399**

(73) Patentinhaber: **ROBERT BOSCH GMBH, Postfach 50, D-7000 Stuttgart 1 (DE)**

(72) Erfinder: **Weyl, Helmut, Dipl.-Ing., Peter-von-Koblenzstrasse 34, D-7141 Schwieberdingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen elektrochemischen Messfühler zur Bestimmung des Sauerstoffgehalts in Gasen, insbesondere in Abgasen von Brennkraftmaschinen gemäss dem Oberbegriff des Anspruchs 1.

### Stand der Technik

Die Erfindung geht aus von einem elektrochemischen Messfühler nach der Gattung des Hauptanspruchs; derartige Messfühler finden zur Bestimmung des Sauerstoffgehalts in Gasen, insbesondere in Abgasen von Brennkraftmaschinen Verwendung. Ein solcher Messfühler ist zum Beispiel bekannt aus der DE-OS 28 41 771 (US-PS 4 219 399), ermöglicht mittels des beschriebenen stabförmigen Heizelements aber keinen günstigen Wärmeübergang zum Festelektrolytrohr, erzeugt mit seinem Heizelement anlässlich der Messfühler-Montage und während seiner Anwendung zum Bruch des Festelektrolytrohrs führen könnende, mechanische Spannungen und besitzt einen noch relativ komplizierten Aufbau für einen Messfühler, der wahlweise mit oder ohne Heizelement hergestellt werden soll. Weiterhin ist aus der DE-OS 30 23 337 bekannt, bei derartigen Messfühlern zwischen Festelektrolytrohr und stabförmigem Heizelement feinteiliges keramisches Material anzuordnen; das keramische Material dient infolge seiner steten Reibung an der Innenelektrode vorzugsweise zur Reaktivierung dieser Innenelektrode.

Darüber hinaus sind aus den nachfolgend genannten, vorveröffentlichten Druckschriften noch weitere elektrochemische Messfühler bekannt:

In der britischen Patentanmeldung GB-A 2 017 925 und in der US-Patentschrift 4 169 778 sind Messfühler beschrieben, die auch zur im Hauptanspruch aufgeführten Gattung gehören und deren stabförmige Heizelemente den bei Dieselmotoren verwendeten Glühstiftkerzen entsprechen; die Heizelemente sind dabei im jeweiligen Messfühler starr fixiert und haben infolge des relativ grossen Abstands zwischen ihrer Mantelfläche und der Innenseite des Festelektrolytrohrs nur einen schlechten Wärmeübergang zum Festelektrolytrohr.

Aus der französischen Patentanmeldung 2 396 292 ist ein Messfühler bekannt, der auch zur im Hauptanspruch aufgeführten Gattung gehört; die bei den verschiedenen Ausführungsformen des Messfühlers in den Innenraum des Festelektrolytrohrs hineinragenden Heizstäbe sind aber entweder nicht kompakt (Figuren 1 und 2) oder nur als kompliziertes Bauteil (Figuren 3 und 4) ausgebildet, weil sie gleichzeitig als elektrische Leitung zur Bezugselektrode des Messfühlers dienen.

Die US-Patentschrift 3 546 086 zeigt einen Messfühler, der ebenfalls zur im Hauptanspruch aufgeführten Gattung gehört; aus der nur das Prinzip des Messfühlers darstellenden Zeichnung ist zu ersehen, dass die Befestigung des stabförmigen Heizelements und die Führung der Heizelement-Anschlussdrähte nicht für eine praktische Ausführung eines Messfühlers geeignet sind.

Darüber hinaus ist aus der US-Patentschrift 3 576 730 ein Messfühler bekannt, dessen messgasseits geschlossenes Festelektrolytrohr von einem Heizelement mit Abstand umgeben ist; infolge des strömenden Messgases zwischen der auf dem Festelektrolytrohr angeordneten Messelektrode und dem Heizelement ist keine exakte Temperaturführung des Festelektrolytrohrs möglich.

### Erfindung und deren Vorteile

Der erfindungsgemässe elektrochemische Messfühler mit den kennzeichnenden Merkmalen des Anspruchs 1 hat demgegenüber den Vorteil, dass das Heizelement einen günstigen Wärmeübergang zum Festelektrolytrohr aufweist, dass ausserdem mechanische Spannungen zwischen Heizelement und Festelektrolytrohr vermieden werden und dass die Herstellung derartiger Messfühler problemlos und wirtschaftlich möglich ist.

Durch die in den Ansprüchen 2 und 3 aufgeführten Massnahmen sind vorteilhafte Weiterbildungen und Verbesserungen des im Hauptanspruch angegebenen Messfühlers möglich.

### Zeichnung

Ein Ausführungsbeispiel der Erfindung ist in der Zeichnung dargestellt und in der nachfolgenden Beschreibung näher erläutert. Es zeigen:

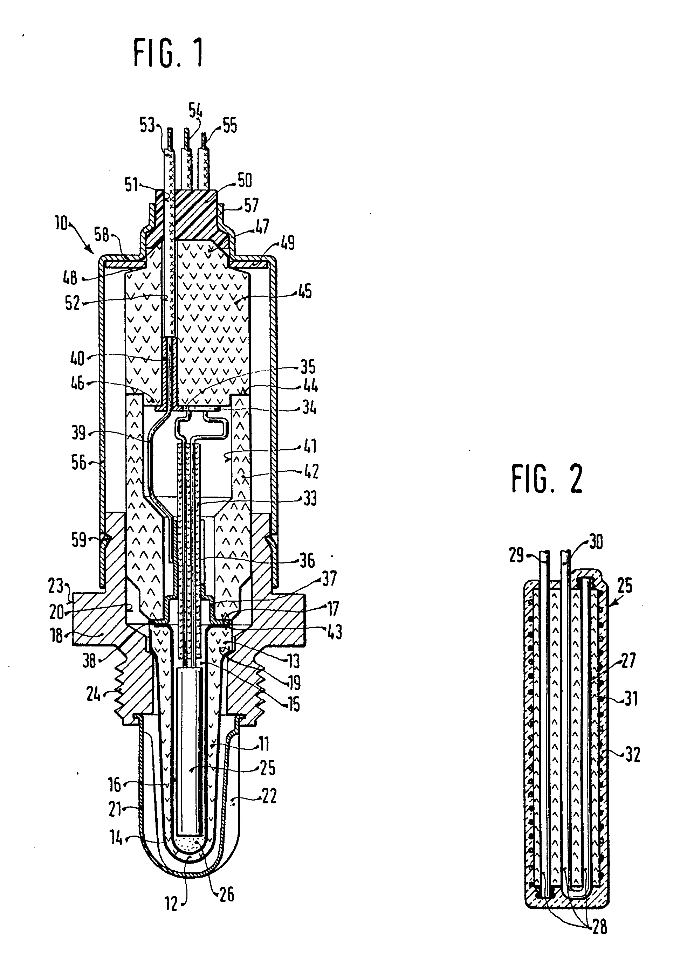

Fig. 1 einen Längsschnitt durch einen erfindungsgemässen Messfühler in vergrösserter Darstellung und

Fig. 2 einen Längsschnitt durch das noch weiter vergrössert dargestellte Heizelement des Messfühlers in Fig. 1.

### Beschreibung des Ausführungsbeispiels

Der in Fig. 1 dargestellte elektrochemische Messfühler 10 enthält ein sauerstoffionen-leitendes Festelektrolytrohr 11, das beispielsweise aus stabilisiertem Zirkondioxid besteht, an seinem in ein nicht dargestelltes Abgasrohr ragendem Ende einen angeformten Boden 12 hat und an seiner Aussenseite einen Flansch 13 aufweist. Dieses Festelektrolytrohr 11 ist auf seiner äusseren Oberfläche mit einer katalysierend wirkenden porösen Messelektrode 14 versehen, die vorzugsweise aus Platin besteht und zumindest teilweise den vom Messgas umspülten Bereich und zusätzlich zumindest teilweise den Flansch 13 des Festelektrolytrohrs 11 seitlich bedeckt; auf die Darstellung einer auf der Messelektrode 14 aufgebrachten Schutzschicht gegen mechanische und thermische Angriffe der Messgase, wie sie beispielsweise in der deutschen Offenlegungsschrift 1 809 622 offenbart ist, bzw. auf die Darstellung einer Diffusionsschicht, wie sie in den deutschen Offenlegungsschriften 1 954 663 und 2 711 880 beschrieben sind, wurde aus Gründen der Klarheit der Figur verzichtet.

Das Festelektrolytrohr 11 trägt auf seiner dem Innenraum 15 zugewendeten Oberfläche eine Bezugselektrode 16, die bis in den Bereich des Festelektrolytrohr-Bodens 12 als Kontaktfläche hineinreicht und aus porösem Platin bestehen kann; die Bezugselektrode 16 führt als Leiterbahn bis auf die Stirnfläche 17 des Festelektrolytrohrs 11.

Das Festelektrolytrohr 11 wird auf einem Teil seiner Länge von einem Gehäuse 18 umfasst, das elektrische Leitfähigkeit besitzt und aus warmfestem Stahl bestehen kann; auf einer Schulter 19 in der Längsbohrung 20 dieses Gehäuses 18, das zumeist als Masseanschluss für das Sondensignal dieses Messfühlers 10 dient, liegt das Festelektrolytrohr 11 mit seinem Flansch 13 auf. Das Festelektrolytrohr 11 ragt mit seinem messgasseitigen Bereich aus der Gehäuse-Längsbohrung 20 heraus und ist von einem Schutzrohr 21 umgeben; dieses Schutzrohr 21 ist am Gehäuse 18 befestigt, umgibt das Festelektrolytrohr 11 mit Abstand, besteht aus warmfestem Material und weist eine Anzahl von Ein- bzw. Auslassöffnungen 22 für die Messgase auf. Das Gehäuse 18 hat an seiner Aussenseite ein Schlüsselsechskant 23 und ein Einschraubgewinde 24 für den dichten und festen Einbau in ein nicht dargestelltes messgasführendes Rohr.

Der Innenraum 15 des Festelektrolytrohrs 11 enthält ein stabförmiges Heizelement 25, das in Fig. 2 im Schnitt und vergrössert dargestellt ist, den Querschnitt des Festelektrolytrohr-Innenraums 15 im wesentlichen ausfüllt und bevorzugterweise im Festelektrolytrohr-Innenraum 15 dadurch in Längsrichtung fixiert ist, dass elektrisch isolierendes, keramisches pulver- oder faserförmiges Material im Bereich des Festelektrolytrohr-Bodens 12 eingefüllt wird. Als derartiges Material 26 können Aluminiumoxid, stabilisiertes Zirkondioxid, Magnesiumspinell oder Silikate dienen. Das gleiche keramische Material 26, bevorzugterweise jedoch in Faserform, kann auch in den Bereich des Festelektrolytrohr-Innenraums 15 eingefüllt werden, der sich dem Heizelement 25 anschlussseitig anschliesst; als Abdichtung (nicht dargestellt) kann ein ringförmiges Element (O-Ring) zwischen Heizelement 25 und Festelektrolytrohr 11 bzw. einer weiter zum Anschluss hin liegenden Buchse dienen (wie z.B. Klemmhülse 37). Das Heizelement 25 besitzt einen Träger 27, der bevorzugterweise aus einem zylindrischen Keramikteil besteht, Längsbohrungen 28 für Anschlussdrähte 29 und 30 aufweist und auf seiner Aussenseite ein wendelförmig aufgewickeltes Widerstandselement 31 trägt; während der Endabschnitt des Anschlussdrahts 29 aus der ersten Träger-Längsbohrung 28 herausragt und mit dem einen Ende des drahtförmigen Widerstandselements 31 durch ein geeignetes Schweissverfahren verbunden ist, hat der Anschlussdraht 30 die Form einer Haarnadel. Die beiden Schenkel des haarnadelförmigen Abschnitts vom Anschlussdraht 30 führen in der zweiten und dritten Längsbohrung 28 des Trägers 27 entlang und der aus dem Träger 27 herausragende Endabschnitt des kurzen Schenkels vom Anschlussdraht 30 ist mit dem zweiten Ende des drahtförmigen Widerstandselements 31 verbunden. Die Anschlussdrähte 29 und 30 haben einen Durchmesser von 0,5 mm und bestehen aus warm- und zunderfestem, elektrisch leitendem Material (z.B. Nickel); das Widerstandselement 31 hat einen Drahtdurchmesser von 0,25 mm und besteht aus einer handelsüblichen Widerstandslegierung (z.B. auf Cr-Ni-Basis). Der Träger 27 einschliesslich des Widerstandselements 31 ist mit einer keramischen Isolier- und Schutzschicht 32 ummantelt, die vorzugsweise im Plasma-Spritzverfahren aufgetragen ist; geeignete Materialien für diese Schicht 32 sind beispielsweise Aluminiumoxid und Magnesiumspinell. Der Aussendurchmesser des Heizelements 25 ist 4 mm und füllt den Querschnitt des Festelektrolytrohr-Innenraums 15 weitgehend aus; der zwischen Heizelement 25 und Festelektrolytrohr 11 befindliche enge, nicht bezeichnete Spalt reicht dennoch aus, um den für das System erforderlichen Luftsauerstoff im Festelektrolytrohr-Innenraum 15 bis zum Boden 12 gelangen zu lassen. Die dünnen Anschlussdrähte 29 und 30 des Heizelements 25 sind flexibel genug, um anlässlich der Montage und während der Anwendung des Messfühlers 10 auf das Festelektrolytrohr 11 wirkende mechanische Spannungen auszuschliessen. Anstelle der Isolier- und Schutzschicht 32 auf dem Heizelement 25 kann auch auf dem von der Bezugselektrode 16 bedeckten Bereich des Festelektrolytrohrs 11 eine poröse Isolier- und Schutzschicht aufgetragen werden.

Die aus dem Heizelement 25 herausragenden Anschlussdrähte 29 und 30 führen in nicht bezeichneten Längsbohrungen eines Keramikrohrs 33 entlang und sind am aus dem Keramikrohr 33 herausragenden Endabschnitt jeweils mit einer aus Blech bestehenden Crimphülse 34 bzw. 35 verbunden.

Das Keramikrohr 33 wird von einer mit Längsschlitzen 36 versehenen Klemmhülse 37 gehalten, die aus Blech besteht und einen Flansch 38 aufweist, mit dem sie auf der Festelektrolytrohr-Stirnfläche 17 aufliegt; der Klemmhülsen-Flansch 38 bildet demzufolge ein elektrisches Verbindungsteil zur Bezugselektrode 16, deren Ende auf der Festelektrolytrohr-Stirnfläche 17 endet. An dieser Klemmhülse 37 ist anschlussseitig ein die Messfühlerspannung führender Draht 39 durch Schweissen befestigt, der an seinem freien Endabschnitt in einer Crimphülse 40 festgelegt ist.

Das Keramikrohr 33 und die Klemmhülse 37 mit den Heizelement-Anschlussdrähten 29, 30 und dem Sondensignal-Draht 39 verlaufen in der Längsbohrung 41 eines Keramikrohrs 42, das mit seiner ersten Stirnfläche 43 auf dem Klemmhülsen-Flansch 38 aufsteht und seitlich in der Gehäuse-Längsbohrung 20 fixiert wird. Auf der zweiten Stirnfläche 44 des Keramikrohrs 42 liegt ein Keramikabschlussteil 45 auf, das mit einem Vorsprung 46 in die Keramikrohr-Längsbohrung 41 einfasst und somit seitlich fixiert ist. Der anschlussseitige Endabschnitt dieses Keramikabschlussteils 45 besitzt ebenfalls einen koaxialen Vorsprung 47; die um den Vorsprung 47 gebildete schräge Schulter ist mit 48 bezeichnet. Auf diesem Abschlussteil-Vorsprung 47 liegt eine ringförmige Federscheibe 49 auf, die einen grösseren Aussendurchmesser hat als das Keramikabschlussteil 45.

Auf der Stirnfläche des Abschlussteil-Vorsprungs 47 ist ein gummiartiger Stopfen 50 angeordnet. Durch eine erste Bohrung 51 im Stopfen 50 und eine damit fluchtende erste Bohrung 52 im Keramikabschlussteil 45 führt ein isoliertes Anschlusskabel 53, dessen im Messfühler 10 befindlicher freier Endabschnitt abisoliert und in der Crimphülse 40 mit befestigt wurde; die Crimphülse 40 ragt dabei in die Abschlussteil-Bohrung 52 mit hinein. — Ebenso wie das Anschlusskabel 53 für die Sondenspannung durch den Stopfen 50 und das Keramikabschlussteil 45 geführt sind, sind auch die Anschlusskabel 54 und 55 für das Heizelement 25 verlegt.

Die hintereinander angeordneten Teile Festelektrolytrohr 11, Keramikrohr 42, Keramikabschlussteil 45 und Stopfen 50 werden im Gehäuse 18 mittels einer Haltehülse 56 fixiert; diese aus Blech bestehende Hülse 56 übergreift mit einem koaxialen Stutzen 57 den Umfang des Stopfens 50 und mit einer Schulter 58 die auf dem Keramikabschlussteil 45 aufliegende Federscheibe 49. An seinem entgegengesetzten Endabschnitt besitzt die Haltehülse 56 einige auf dem Umfang verteilte, nach innen weisende Einscherlappen 59, die unter mechanischer Vorspannung der Federscheibe 49 in nicht bezeichnete Einkerbungen auf der Aussenseite des Gehäuses 18 einrasten.

Ergänzend sei bemerkt, dass üblicherweise angeordnete Dicht- bzw. Ausgleichsringe zwischen Gehäuseschulter 19 und Festelektrolytrohr-Flansch 13 und ähnliches im Ausführungsbeispiel nicht erwähnt wurde; auch auf die Darstellung einer speziellen Luftzuführung in den Festelektrolytrohr-Innenraum 15 — wie bei bekannten Messfühlern vorhanden — wurde verzichtet, insbesondere deshalb auch, weil die erforderlichen Fertigungstoleranzen der anschlussseitigen Teile des Messfühlers 10 genügend Luftsauerstoff in den Festelektrolytrohr-Innenraum 15 eintreten lassen.

Der Messfühler 10 kann nach dem potentiometrischen oder dem polarographischen Messprinzip arbeiten; im letzteren Fall ist vor bzw. auf der Messelektrode eine Diffusionsbarriere für Sauerstoffmoleküle in bekannter Weise anzuordnen.

## Patentansprüche

1. Elektrochemischer Messfühler (10) zur Bestimmung des Sauerstoffgehalts in Gasen, insbesondere in Abgasen von Brennkraftmaschinen, dessen Sensorelement ein messgasseits mit einem Boden (12) verschlossenes, sauerstoffionen-leitendes Festelektrolytrohr (11) hat, wobei dieses Festelektrolytrohr (11) auf seiner Aussenseite eine schichtförmige, gasdurchlässige, dem Messgas ausgesetzte und katalysierend wirkende Messelektrode (14) und auf dieser Messelektrode (14) bevorzugterweise eine poröse Schicht trägt, und wobei das Festelektrolytrohr (11) ausserdem auf seiner Innenseite mit einer schichtförmigen, gasdurchlässigen Bezugselektrode (16) versehen ist, und wobei zudem das Festelektrolytrohr (11) in seinem Innenraum (15) ein stabförmiges Heizelement (25) enthält, welches ein elektrisches Widerstandselement (31) besitzt, dadurch gekennzeichnet, dass das Heizelement (25) ein kompaktes Bauteil ist, welches den Querschnitt des Festelektrolytrohr-Innenraums (15) im wesentlichen ausfüllt und flexibel von drahtförmigen, elektrischen Anschlüssen (29, 30) gehalten wird, die am anschlussseitigen Endabschnitt des Heizelements (25) angeordnet sind.

2. Elektrochemischer Messfühler (10) nach Anspruch 1, dadurch gekennzeichnet, dass zwischen dem Widerstandselement (31) und der auf der Innenseite des Festelektrolytrohrs (11) aufgebrachten Bezugselektrode (16) eine elektrische Isolierung (32) angeordnet ist.

3. Elektrochemischer Messfühler (10) nach Anspruch 1 oder 2, dadurch gekennzeichnet, dass das Heizelement (25) im Festelektrolytrohr-Innenraum (15) in Längsrichtung mittels eines elektrisch isolierenden, keramischen pulver- oder faserförmigen Materials (26) gestützt wird.

## Claims

1. Electrochemical sensor (10) for determining the oxygen content of gases, in particular exhaust gases of internal combustion engines, the sensor element having an oxygen ion-conducting solid electrolyte tube (11) which is closed at the bottom (12) on the side of the gas being measured, this solid electrolyte tube (11) carrying on its outside a layer-like, gas-permeable measuring electrode (14), which is exposed to the gas being measured and has a catalysing action, and preferably carrying a porous layer on this measured electrode (14), and the solid electrolyte tube (11) in addition being provided on its inside with a layer-like, gas permeable reference electrode (16), and the solid electrolyte tube (11) furthermore containing in its interior (15) a rod-shaped heating element (25) comprising an electric resistance element (31), characterised in that the heating element (25) is a compact component which substantially fills the cross-section of the interior (15) of the solid electrolyte tube and is held flexible by wire-type electrical connections (29, 30) which are arranged on the terminal end section of the heating element (25).

2. Electrochemical sensor (10) according to Claim 1, characterised in that an electrical insulation (32) is provided between the resistance element (31) and the reference electrode (16) applied to the inside of the solid electrolyte tube (11).

3. Electrochemical sensor (10) according to Claim 1 or 2, characterised in that the heating element (25) is supported in the interior (15) of the solid electrolyte tube in the longitudinal direction by means of an electrically insulating ceramic, pulverulant or fibrous material (26).

## Revendications

1. Capteur de mesure électrochimique (10) pour déterminer la teneur en oxygène dans des gaz notamment des gaz d'échappement de moteurs à combustion interne, dont l'élément de captage comporte un tube à électrolyte solide (11), conducteur des ions d'oxygène, fermé par un fond (12) du côté du gaz à mesurer, ce tube à électrolyte solide (11) portant sur sa face extérieure, une électrode de mesure (14) en forme de couche, perméable aux gaz, exposée au gaz à mesurer et ayant un effet catalyseur, et de préférence sur cette électrode de mesure (14) une couche poreuse, et le tube à électrolyte solide (11) est en outre muni sur sa face intérieure d'une électrode de référence (16), perméable aux gaz, en forme de couche, et en outre le tube à électrolyte solide (11) contient un élément chauffant (25) en forme de tige dans son volume intérieur (15), élément chauffant qui possède un élément à résistance électrique (31), caractérisé en ce que l'élément chauffant (25) est une pièce compacte qui remplit pratiquement la section du volume intérieur (15) du tube à électrolyte solide et est maintenue de façon souple par des raccords électriques (29, 30) en forme de fils, qui sont prévus sur le segment d'extrémité situé du côté du raccordement de l'élément chauffant (25).

2. Capteur de mesure électrochimique (10) selon la revendication 1, caractérisé en ce qu'entre l'élément résistant (31) et l'électrode de référence (16) rapportée sur la face intérieure du tube à électrolyte solide (11), il est prévu une isolation électrique (32).

3. Capteur de mesure électrochimique (10) selon la revendication 1 ou 2, caractérisé en ce que l'élément chauffant (25) est appuyé dans le volume intérieur (15) du tube à électrolyte solide, dans la direction longitudinale, à l'aide d'un matériau pulvérulent ou fibreux (26), céramique, isolant électrique.

# FIG. 1

# FIG. 2